# EUROPEAN PATENT SPECIFICATION

(11) **EP 2 748 502 B1**
(45) Date of publication and mention of the grant of the patent: **27.04.2016**
(21) Application number: 12772806.1
(22) Date of filing: 22.08.2012
(51) Int. Cl.: F16L 9/18, F16L 55/033

(54) **METHOD FOR ATTENUATING NOISE PRODUCED BY PIPES AND PIPE ARRANGEMENT**
VERFAHREN ZUR DÄMPFUNG DES DURCH RÖHREN ERZEUGTEN SCHALLS UND RÖHRENANORDNUNG
PROCÉDÉ D'ATTÉNUATION DU BRUIT PRODUIT PAR DES TUYAUX, ET AMÉNAGEMENT DE TUYAUX

(30) Priority: 23.08.2011 US 201161526385 P
(43) Date of publication of application: 02.07.2014
(73) Proprietor: Koninklijke Philips N.V., 5656 AE Eindhoven (NL)
(72) Inventor: GEERLINGS, Alexander Cornelis, NL-5656 AE Eindhoven (NL); SIETSMA, Jan, NL-5656 AE Eindhoven (NL)
(74) Representative: Kroeze, Johannes Antonius
(86) International application number: PCT/IB2012/054238
(87) International publication number: WO 2013/027181

(56) References cited:
- DE-A1- 10 121 366
- DE-A1-102004 035 955
- GB-A- 2 411 711
- JP-A- H1 128 478
- JP-A- S6 283 085

## Description

### FIELD OF THE INVENTION

The present invention relates to a method for attenuating noise produced by pipes transporting a flow of fluids, gases, particles or combinations of any of those. Further, the present invention relates to a pipe arrangement and a system for carrying out said method.

### BACKGROUND OF THE INVENTION

Energy plants in areas where water is scarce will be equipped with dry or air cooled heat exchangers. After leaving a generator of the energy plant the steam flows through a pipe towards a heat exchanger unit where the steam is cooled, for instance, by means of air generated by fans. The condensed water is led back to the generator through a return pipe. This especially occurs in arid environments where water is preserved. According to the state of the art two separate support structures are used therefore, one pipe carrying the steam and the return pipe carrying the condensed water back to the generator.

Due to high pressures and a high flowing speed of the steam, the steam produces noise while flowing through the pipe. Thus, the pipe carrying the steam radiates noises which pollute the environment. Especially inside city limits costly acoustic measures have to be taken to prevent a noise pollution caused by the pipe carrying the steam. A proven method of increasing the insulation of the steam pipe is to add mass to the pipe or to equip the steam pipe with a special insulating element, such as an insulating cover. However, such an insulation produces extra material costs which increase the overall costs of such a pipe system considerably. A similar pipe system is disclosed in document DE 10 2004 035 955A1.

### SUMMARY OF THE INVENTION

It is an object of the present invention to provide an improved method and a pipe arrangement for attenuating noise produced by steam flowing through a pipe, which are, compared to methods and systems known in the art, cheaper considering the material costs and easier to apply.

In a first aspect of the present invention a method is presented, comprising the steps of:
- providing a pipe arrangement, which comprises an inner pipe that defines in its inside an inner flow channel which progresses in pipe direction of the inner pipe, and an outer pipe that surrounds the inner pipe and progresses substantially parallel thereto, thereby defining an outer flow channel between the two pipes which is substantially parallel to the inner flow channel,
- establishing a steam flow in and along the inner flow channel,
- establishing a water flow in and along the outer flow channel, said water flow being adapted to attenuate a noise produced by said steam flow flowing through the inner flow channel, and
- streaming gas into the water flow (28) to generate a stream of gas bubbles (34) within said water flow (28).

In a further aspect of the present invention, a pipe arrangement is presented for carrying out said method.

In a still further aspect of the present invention, a corresponding system is presented for carrying out said method.

Preferred embodiments of the invention are defined in the dependent claims. It shall be understood that the claimed pipe arrangement and the claimed system have similar and/or identical preferred embodiments as the claimed method and as defined in the dependent claims.

It has been recognized by the inventors that an additional acoustical insulation of the pipe through which the steam is flowing can be prevented by making use of a double-walled pipe and establishing a water flow in and along an outer flow channel of an outer pipe that surrounds the inner pipe carrying the steam flow. Said water flow in the outer flow channel is being adapted to attenuate the noise produced by the steam flow flowing through the inner flow channel of the inner pipe. The already available water in the outer flow channel thereby acts as added mass to the inner pipe improving the insulation that attenuates the radiation of the acoustics produced by the steam in the inner flow channel. In an above explained implementation for energy plants, the outer water layer basically becomes the water reservoir for the turbine. So the generator no longer needs a separate water reservoir. This saves space in the generator facility.. In view of the amount of return water compared to the volume of the outer flow channel a one-time fill may be required.

The usage of such a double-walled pipe arrangement is compared to known methods using two separate pipes not only more cost efficient but also takes up less space due to the integrated pipe structure. An additional insulating element, which produces extra material costs and takes up space, is thus no longer necessary.

It has to be noted that the outer pipe can have any volume as long as the water mass flowing through the outer flow channel of the used pipe arrangement is large enough to perform the task of adding acoustical insulation. As long as the pipe arrangement is designed as defined above, both pipes, the inner and the outer pipe, can have any desired shape. Of course, with respect to an ideal steam or water flow a circular profile of the two pipes is preferred. However, also other profiles are conceivable without leaving the scope of the present invention.

The water flow directly absorbs the noises produced by the steam in the inner flow channel preventing a propagation of noise outside the pipe arrangement. Thus, only one space saving pipe arrangement with a single double-walled pipe is needed instead of two separate pipes and their structural supports.

The method further comprises the step of streaming gas into the water flow to generate a stream of gas bubbles within said water flow. It has been shown that the acoustical absorption effect can be increased by injecting gas into the water flow. In particular air but also other gases may be used therefore. This advantageous effect relies on the changed incompressibility. Noises are thereby effectively attenuated by the gas bubbles introduced within the water layer. Said gas can be streamed into the water flow either before the water flow is entering the presented pipe arrangement or by injecting gas into the already established water flow within the outer flow channel. For a horizontal pipe arrangement this can be exemplarily done by a pipe or conduit having a small diameter compared to the size of the outer flow channel and being arranged within the outer flow channel, progressing substantially parallel thereto. Preferably, said conduit is arranged at the bottom of the outer pipe. To keep an even release of the bubbles all throughout the pipe system, preferably porous nozzles or small holes are used that are arranged within said conduit. For a vertical pipe, in contrast, a circular ring is preferably used to release the gas bubbles. Said circular ring also having a small diameter compared to the size of the outer flow channel and being arranged within the outer flow channel, preferably concentrically to the inner and the outer tube.

The additional noise absorption effect is in this embodiment also caused by scattering of the noise at the boundary of the gas bubbles between water and gas. The gas within the gas bubbles produces an additional acoustical damping. In result, almost no noise is leaving the pipe arrangement.

According to another embodiment, it is furthermore preferred that the gas is constantly streamed into the water flow to generate a stream of gas bubbles which is equally distributed within said water flow. An equal distribution increases the absorption effect even more, since it decreases the probability that noise is leaving the pipe arrangement without being attenuated by water or gas flowing through the outer flow channel.

According to a further preferred embodiment, the method additionally comprises the step of extracting at least a part of said gas from the outer flow channel to prevent pressure build up or expelling of the water layer. This can, for example, be done by draining conduit within the outer pipe which connects the outer flow channel to the surrounding of the outer pipe. This conduit can, for example, be installed at the top of the outer pipe in order to extract ascending gas bubbles. Such an extraction of gas prevents a pressure build up within the outer flow channel and prevents the inner pipe of being exposed to gas due to the expelling of the water layer by the inserted gas.

According to another embodiment of the present invention, it is furthermore preferred that the inner pipe is arranged coaxially to the outer pipe. Such a coaxial arrangement of the pipes leads to an equally distributed water flow around the inner pipe. This again enables an equally efficient insulation in all spatial directions. In case of cylindrical pipes with circular profiles a concentrical arrangement of the two pipes is especially advantageous in view of the most efficient use of water and an equal amount of water layer all around the inner pipe.

According to a further preferred embodiment, the method comprises the step of establishing a vibration insulated connection between the two pipes using a vibration insulated mount. Such a vibration insulated connection prevents a flanking path for acoustics between the inner and the outer pipe. Thus, the effectiveness of the acoustical absorption by the water flow is not corrupted. Said vibration insulated mount can, for example, be realized by an additional insulating element which surrounds the inner pipe to which the mount is connected, thus preventing a direct connection between the outer and the inner pipe. Note the vibration isolation only has to cover the acoustic relevant frequencies while performing a normal static support of the inner pipe system.

According to a still further preferred embodiment, the volume of the water flow is comparatively large with respect to the volume of the steam flow. Increasing the volume of the water flow concurrently increases the acoustical damping effect. The water flow is preferably very low in order not to introduce additional flow noise due to the water flow.

According to a further aspect of the present invention a pipe arrangement is presented for carrying out the presented method, comprising:
- an inner pipe that defines in its inside an inner flow channel which progresses in pipe direction of the inner pipe, and
- an outer pipe that surrounds the inner pipe and progresses substantially parallel thereto, thereby defining an outer flow channel between the two pipes which is substantially parallel to the inner flow channel,
said inner pipe having a steam inlet and a steam outlet for streaming in and out steam to establish a steam flow in and along the inner flow channel from said steam inlet to said steam outlet, said outer pipe having a water inlet and a water outlet for streaming in and out water to establish a water flow in and along the outer flow channel from said water inlet to said water outlet, said water flow being adapted to attenuate a noise produced by said steam flow flowing through the inner flow channel.

The technical principle is the same as described above in accordance with the presented method. By providing a double-walled pipe arrangement with an inner pipe carrying the steam and an outer pipe carrying the return flow of water, which surrounds the inner pipe, the water in the outer flow channel attenuates the radiation of the acoustics of the steam flow and thereby acts as added mass acoustically insulating the inner pipe.

The pipes itself can be of any shape, in particular cylindrical or of the shape of a prism. The steam and water in- and outlets can also be of any shape and can be arranged at any position of the inner or outer pipe, respectively, as long as they are adapted to stream in and out steam or water for establishing a steam flow within the inner flow channel and a water flow within the outer flow channel. Preferably, the steam inlet and the water inlet are arranged at opposite ends of the pipe arrangement to generate a steam flow within the inner flow channel which is oriented in the opposite direction to the return water flow in the outer flow channel. The steam outlet and the water outlet are, therefore, also arranged at opposite ends of the pipe arrangement.

According to a preferred embodiment said outer pipe further comprises a gas inlet for streaming gas, in particular air into the water flow to generate a stream of gas/air bubbles within said water flow. It has been shown that the acoustical absorption effect can be increased by injecting gas into the water flow. This advantageous effect relies on the changed incompressibility. Noises are thereby effectively attenuated by the gas bubbles introduced within the water layer. Said gas can be streamed into the water layer either before the water flow is entering the presented pipe arrangement or by injecting gas into the already established water flow within the outer flow channel. For a horizontal pipe arrangement this can be exemplarily done by a pipe or conduit having a small diameter compared to the size of the outer flow channel and being arranged within the outer flow channel, progressing substantially parallel thereto. Preferably, said conduit is arranged at the bottom of the outer pipe. To keep an even release of the bubbles all throughout the pipe system, preferably porous nozzles or small holes are used that are arranged within said conduit. For a vertical pipe, in contrast, a circular ring is preferably used to release the gas bubbles. Said circular ring also having a small diameter compared to the size of the outer flow channel and being arranged within the outer flow channel, preferably concentrically to the inner and the outer tube.

The additional noise absorption effect is in this embodiment also caused by scattering of the noise at the boundary of the gas bubbles between water and gas. The gas within the gas bubbles produces an additional acoustical damping. In result, almost no noise is leaving the pipe arrangement.

According to another embodiment the outer pipe comprises a conduit for extracting at least a part of said gas from the outer flow channel to prevent pressure build up and deterioration of the insulation properties of the water layer. This conduit can, for example, be installed at the top of the outer pipe in order to extract ascending gas bubbles. Such an extraction of gas prevents a pressure build up within the outer flow channel and, in that way expels the water layer around the inner pipe.

According to a further embodiment the inner pipe is coaxial to the outer pipe. Such a coaxial arrangement of the pipes leads to an equally distributed water flow around the inner pipe. This again enables an equally efficient insulation in all spatial directions. In case of cylindrical pipes with circular profiles a concentrical arrangement of the two pipes is especially advantageous.

According to a further embodiment the presented pipe arrangement further comprises a support structure connecting the inner and the outer pipe with each other via an insulation element for establishing a vibration insulated connection between the two pipes. Such a vibration insulated connection prevents a flanking path for acoustics between the inner and the outer pipe. Preferably the insulation establishes its effect in the noise relevant frequency range, while maintaining the structural support. Thus, the effectiveness of the acoustical insulation property and absorption by the water flow is not corrupted. Said vibration insulated mount can, for example, be realized by an additional resilient insulating element which surrounds the inner pipe to which the mount is connected, thus preventing a direct connection between the outer and the inner pipe.

According to a still further embodiment the diameter of the outer pipe is comparatively large with respect to the diameter of the inner pipe. Thereby, the mass of water flowing through the outer flow channel is large enough to attenuate the radiation of the acoustics produced by the steam flowing through the inner flow channel.

In a still further aspect, the present invention relates to a system for carrying out the method presented above, comprising:
- a first device, in particular a generator of an energy plant, which is adapted to receive water and to transform said water into steam,
- a second device, in particular a heat exchanger, which is adapted to receive steam and to transform said steam into water, and
- a pipe arrangement, comprising an inner pipe that defines in its inside an inner flow channel which progresses in pipe direction of the inner pipe, and an outer pipe that surrounds the inner pipe and progresses substantially parallel thereto, thereby defining an outer flow channel between the two pipes which is substantially parallel to the inner flow channel, said inner pipe having a steam inlet for streaming in steam from said first device and a steam outlet for streaming out steam to said second device to establish a steam flow in and along the inner flow channel from said first device to said second device, said outer pipe having a water inlet for streaming in water from said second device and a water outlet for streaming out water to said first device to establish a water flow in and along the outer flow channel from said second device to said first device, said water flow being adapted to attenuate a noise produced by said steam flow flowing through the inner flow channel.

Such a system is, for example, applied in an energy or power plant. In such an application said first device is, for example, a generator in which water is received and, due to heat, transformed into steam. The generated steam is led through the inner pipe of said double pipe arrangement, flowing in and along the inner flow channel towards the second device, which in such an application is, for example, a heat exchanger. In the heat exchanger the steam is cooled by means of gas generated by fans or by another water cooling channel in order to transform the generated steam again to water. The condensed water is then led back again to the generator through the outer flow channel of said double pipe arrangement. In this way an effective cooling circuit is established wherein the steam flow and the return flow of water are led through the same double-walled pipe arrangement. In contrast to similar systems known in the art, two separate pipes for carrying the steam and the water are no longer necessary and are now integrated into one. Since the water flow is adapted to attenuate the noise produced by the steam flow flowing through the inner flow channel, an additional insulation of the inner pipe is prevented. Thus, the system does not only save material costs, but also space for an extra pipe, which is according to the present invention now integrated into the second pipe carrying the water flow. The degree of noise attenuation by the water flow has proven to be considerably high compared to a mechanical insulation of the steam pipe.

The above-stated problem is, therefore, solved in an efficient way by the method, the pipe arrangement and the system proposed herein.

### BRIEF DESCRIPTION OF THE DRAWINGS

These and other aspects of the invention will be apparent from and elucidated with reference to the embodiment(s) described hereinafter. In the following drawings
Fig. 1 shows the general principle of the present invention by means of a first embodiment of a pipe arrangement according to the present invention,
Fig. 2 shows the first embodiment of the pipe arrangement according to the present invention in a cross sectional view,
Fig. 3 shows a second embodiment of the pipe arrangement according to the present invention in a cross sectional view,
Fig. 4 shows a longitudinal section of the second embodiment shown in Fig. 3,
Fig. 5 shows a third embodiment of the pipe arrangement according to the present invention in a cross sectional view, and
Fig. 6 shows a system for carrying out the method according to the present invention in a schematic view.

### DETAILED DESCRIPTION OF THE INVENTION

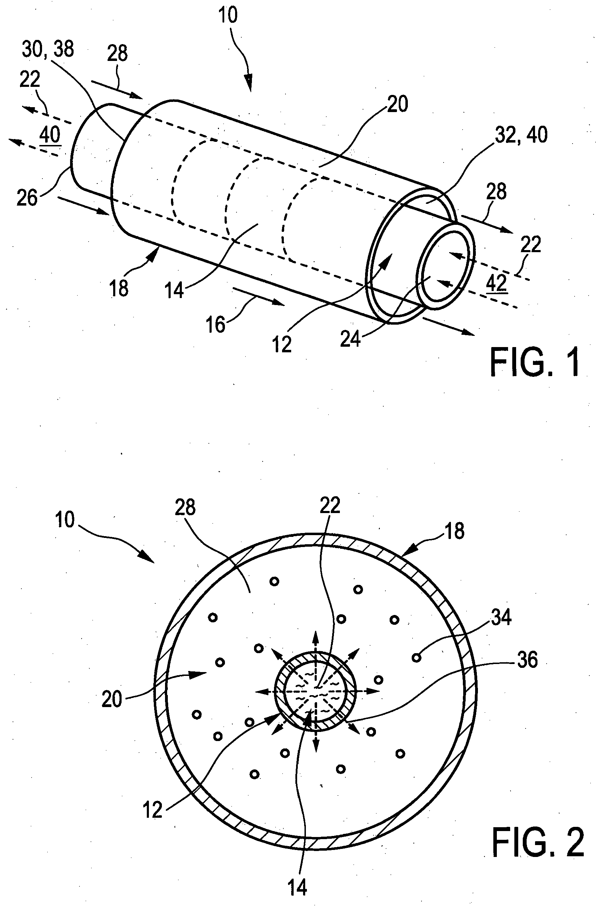

Fig. 1 shows a first embodiment of a pipe arrangement 10 comprising an inner pipe 12 that defines in its inside an inner flow channel 14, which progresses in longitudinal direction 16 of the pipe arrangement 10. The inner pipe 12 is surrounded by an outer pipe 18 that is arranged in parallel to the inner pipe 12. Substantially parallel to the inner flow channel 14 an outer flow channel 20 is defined by the two pipes 12, 18, which also progresses in pipe direction 16.

In this way a double-walled pipe arrangement 10 is presented, with an inner flow channel 14 and an outer flow channel 20. According to the method of the present invention, a steam flow is established in and along the inner flow channel 14. This steam flow is indicated by arrows 22.

The steam flow 22 inserts the inner flow channel 14 at a steam inlet 24 and leaves the inner flow channel at a steam outlet 26. The steam inlet 24 and the steam outlet are preferably arranged at the two opposite ends of the inner pipe 12. However, the steam in-/outlet 24, 26 can also be arranged at any other position of the inner pipe 12. The created steam flow 22 flows from the inlet 24 through the inner flow channel 14 or a part of the inner flow channel 14 to the steam outlet 26. The steam in-/outlet 24, 26 are preferably realized by in-/outlet nozzles that, for simplicity reasons, are not shown in Fig. 1.

Further, according to the method of the present invention a water flow is generated within the outer flow channel 20, which is indicated by arrows 28. The water flow 28 inserts the outer flow channel 20 at a water inlet 30, flows between the two pipes 12, 18 through the outer flow channel 20 and leaves the same at a water outlet 32.

Preferably, the steam flow 22 within the inner pipe 12 and the water flow 28 within the outer flow channel 20 are oriented in opposite directions. Instead of the need of an extra acoustical insulation, the noise, which is produced by the steam 22 flowing through the inner pipe 12, is attenuated by the water flow 28 flowing through the outer flow channel 20. The water thereby acts as added mass improving the acoustical insulation of the inner pipe 12 attenuating the radiation of the acoustics produced by the steam flow 22. In order to efficiently attenuate the noise produced by the steam flow 22, the volume of the water flow 28 needs to be considerably large compared to the volume of the steam flow 22.

If the inner pipe 12 is arranged coaxially to the outer pipe 18, a noise attenuation can be realized effectively in all directions of the pipe arrangement 10. However, a coaxial arrangement of the two pipes 12, 18 is not necessary. For example in cases where the noise produced by the steam flow 22 shall be attenuated only at one side of the pipe arrangement 10, the inner pipe 12 may also be laterally shifted within the outer pipe 18.

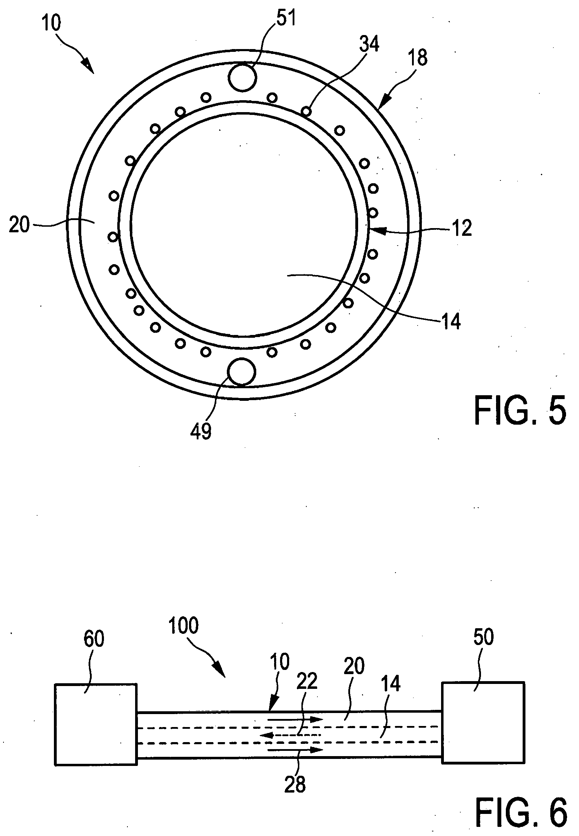

Fig. 2 shows a cross sectional view of the first embodiment of the pipe arrangement 10. Additionally, gas bubbles 34 are shown that are, according to an embodiment of the presented method, introduced into the water flow 28 within the outer flow channel 20. These gas bubbles 34 are preferably generated by constantly streaming gas into the water flow 28 in order to receive an equally distributed stream of gas bubbles 34 within said water flow 28. The gas bubbles 34 add attenuation and improve the acoustical insulation for noises produced by the steam flow 22 in the inner flow channel 14. Said unwanted noise, which is produced within the inner tube 12, is indicated in Fig. 2 by arrows 36. The above-mentioned gas stream is, according to the method of the present invention, either already integrated into the water stream 28 before entering the pipe arrangement 10 or it is separately injected into the water flow 28 through a gas inlet 38 and extracted from the water flow through a gas outlet 40. The gas in-/outlet 38, 40 can exemplarily be realized by gas nozzles (not shown, for simplicity reasons) arranged at both lateral ends of the pipe arrangement 10. More preferably, the gas is injected into the water layer from a pipe or conduit 49 having a small diameter compared to the size of the outer flow channel 20 and being arranged within the outer flow channel 20, progressing substantially parallel thereto. Such a conduit 49 is exemplarily shown in Fig. 5. Preferably, said conduit 49 is arranged at the lower end of the outer pipe 18. To keep an even release of the gas bubbles all throughout the pipe system, preferably porous nozzles or small holes (for simplicity reasons not shown here) are used that are arranged within and along said conduit 49.

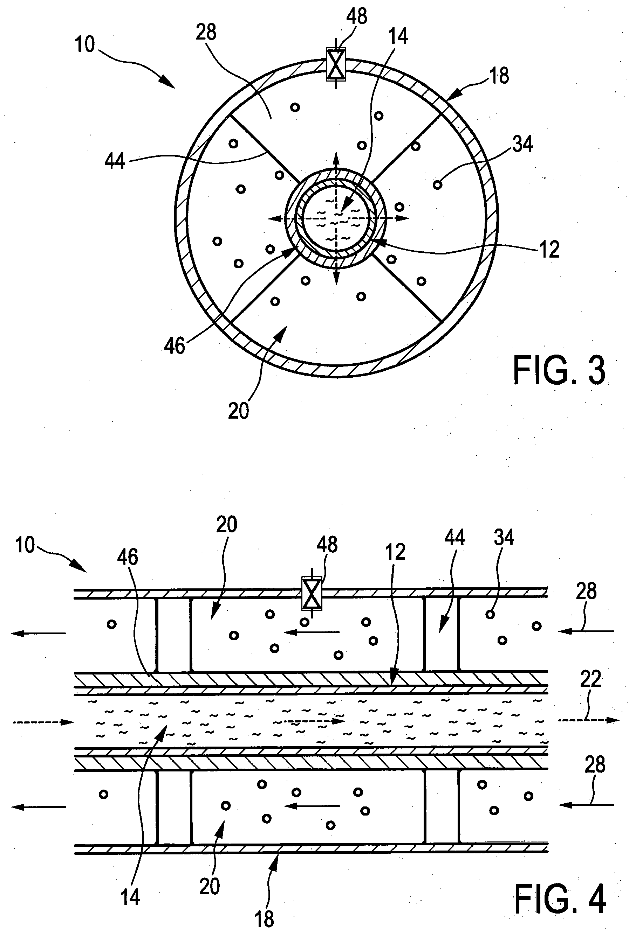

In order to prevent an acoustical flanking path, the two pipes 12, 18 are preferably mounted together at their lateral ends 40, 42 by a vibration insulated connection. For stability reasons, in case of a longer pipe arrangement, an additional support structure is needed to keep the two pipes 12, 18 in a predefined distance from each other. Such a support structure 44 is exemplarily shown in Figs. 3 and 4 that show a second embodiment of the pipe arrangement 10 in a cross section and in a longitudinal section.

The support structure 44 can be realized as mechanical support bars which connect the outer superficies surface of the inner pipe 12 with the inner superficies surface of the outer pipe 18. An additional insulation element 46 can be provided which surrounds the inner pipe 12. The support bars 44 are in this case arranged between the outer pipe 18 and said insulation element 46. In this way, a direct connection between the outer pipe 18 and the inner pipe 12 can be prevented, so that no acoustical flanking path occurs between the two pipes 12, 18.

According to the second embodiment shown in Fig. 3, the outer pipe 18 additionally comprises a pressure relief valve 48 which connects the inner flow channel 20 with the surrounding of the pipe arrangement 10. Through this valve 48 at least a part of the gas 34 can be extracted from the outer flow channel 20 in order to prevent a pressure build up.

According to the third embodiment shown in Fig. 5, an extraction conduit 51 is provided for extracting at least a part of said gas 34 from the outer flow channel 20 to prevent pressure build up and deterioration of the insulation properties of the water layer. This conduit 51 can, for example, be installed at the top of the outer pipe 18 and extends along the longitudinal direction of the outer pipe 18 in order to extract ascending gas bubbles 34. Such an extraction of gas prevents a pressure build up within the outer flow channel and, in that way expels the water layer around the inner pipe 12, as schematically shown in Fig. 5.

Fig. 6 shows a schematic view of a system for carrying out the method according to the present invention. The system 100 comprises a first device 50 and a second device 60 which are connected to each other via the presented pipe arrangement 10. Such a system 100 is, for example, applied in a power plant, more precisely in a cooling circuit of a power plant. The first device 50 can, for example, be a generator of a power plant that produces heat and needs to be cooled by water.

Thus, the water flow 28 is used to cool the generator 50. During cooling the inserted water flow 28 evaporates and the transformed steam 22 leaves the generator 50 again. The generated steam 22 flows back through the inner flow channel 14 of the presented pipe arrangement 10 and enters at the other end of the pipe arrangement 10 the second device 60, which is in such an application usually represented by a heat exchanger. Such a heat exchanger 60 receives the steam 22, cools it by a gas flow or another liquid and condenses it to water 28. The condensed water 28 is then led back to the generator 50 through the outer flow channel 20 of the pipe arrangement 10.

Compared to other systems in the state of the art the double-walled pipe arrangement 10 is used to connect the two devices 50, 60 instead of using two separate pipes, one for the water and one for the steam flow. The water flow 28 that surrounds the inner pipe 12 carrying the steam 22 in this way attenuates the noise produced by the steam 22 and acts as an acoustical insulation. As mentioned above an additional stream of gas bubbles 34 can be generated within the water flow 28 to increase the acoustical absorption effect of the water flow 28. Since no separate pipes are necessary any longer, insulation space can be saved. An extra acoustical insulation of the pipe carrying the steam is also not necessary anymore, so that also material costs can be saved.

In summary, a method, a pipe arrangement and a system are presented which enable for attenuating noise produced by steam flowing through a pipe. The produced noise is mainly attenuated by a water flow which flows through an outer flow channel of a double-walled pipe, which carries in its inner flow channel the steam flow. It has to be noted, that especially the dimensions and the form of the pipe arrangement can vary without leaving the scope of invention.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for attenuating noise produced by pipes transporting a flow of fluids, gases, particles or combinations of any of those, comprising the steps of:
- providing a pipe arrangement (10), which comprises an inner pipe (12) that defines in its inside an inner flow channel (14) which progresses in pipe direction (16) of the inner pipe (12), and an outer pipe (18) that surrounds the inner pipe (12) and progresses substantially parallel thereto, thereby defining an outer flow channel (20) between the two pipes (12, 18) which is substantially parallel to the inner flow channel (14),
- establishing a steam flow (22) in and along the inner flow channel (14),
- establishing a water flow (28) in and along the outer flow channel (20), said water flow (28) being adapted to attenuate a noise produced by said steam flow (22) flowing through the inner flow channel (14), and
streaming gas into the water flow (28) to generate a stream of gas bubbles (34) within said water flow (28).

2. A method as claimed in claim 1, wherein said gas is constantly streamed into the water flow (28) to generate a stream of gas bubbles (34) which is equally distributed within said water flow (28).

3. A method as claimed in claim 1, further comprising the step of extracting at least a part of said gas from the outer flow channel (20) to prevent pressure build up or expelling of the water layer.

4. A method as claimed in claim 1, further comprising the step of arranging the inner pipe (12) coaxially to the outer pipe (18).

5. A method as claimed in claim 1, further comprising the step of establishing a vibration insulated connection between the two pipes (12, 18) using a vibration insulated mount.

6. A method as claimed in claim 1, wherein the volume of the water flow (28) is comparatively large with respect to the volume of the steam flow (22).

7. A system for carrying out the method as claimed in claim 1, comprising:
- a first device (50), in particular a generator of an energy plant, which is adapted to receive water and to transform said water into steam,
- a second device (60), in particular a heat exchanger, which is adapted to receive steam and to transform said steam into water, and
- a pipe arrangement, comprising an inner pipe (12) that defines in its inside an inner flow channel (14) which progresses in pipe direction of the inner pipe (12), and an outer pipe (18) that surrounds the inner pipe (12) and progresses substantially parallel thereto, thereby defining an outer flow channel (20) between the two pipes (12, 18) which is substantially parallel to the inner flow channel (14), said inner pipe (12) having a steam inlet (24) for streaming in steam from said first device (50) and a steam outlet (26) for streaming out steam to said second device (60) to establish a steam flow (22) in and along the inner flow channel (14) from said first device (50) to said second device (60), said outer pipe (18) having a water inlet (30) for streaming in water from said second device (60) and a water outlet (32) for streaming out water to said first device (50) to establish a water flow (28) in and along the outer flow channel (20) from said second device (60) to said first device (50), said water flow (28) being adapted to attenuate a noise produced by said steam flow (22) flowing through the inner flow channel (14), said outer pipe (18) further having a gas inlet (38) for streaming gas into the water flow (28) to generate a stream of gas bubbles (34) within said water flow (28).

8. A pipe system as claimed in claim 7, wherein the outer pipe (18) comprises an extraction conduit (51) for extracting at least a part of said gas from the outer flow channel (20) to prevent pressure build up and deterioration of the insulation properties of the water layer.

9. A system as claimed in claim 7, wherein the inner pipe (12) is coaxial to the outer pipe (18).

10. A system as claimed in claim 7, further comprising a support structure connecting the inner and the outer pipe (12, 18) with each other via an insulation element (46) for establishing a vibration insulated connection between the two pipes (12, 18).

11. A system as claimed in claim 7, wherein the diameter of the outer pipe (18) is comparatively large with respect to the diameter of the inner pipe (12).

## Patentansprüche

1. Verfahren zur Dämpfung des durch Rohre erzeugten Schalls, die eine Strömung von Flüssigkeiten, Gasen, Partikeln oder eine Mischung davon transportieren, die folgenden Schritte umfassend:
- Bereitstellen einer Rohranordnung (10), die ein inneres Rohr (12) umfasst, das an seiner Innenseite einen inneren Strömungskanal (14) definiert, der in Rohrrichtung (16) des inneren Rohres (12) fortschreitet, sowie ein äußeres Rohr (18), welches das innere Rohr (12) umgibt und sich im Wesentlichen parallel dazu erstreckt, und somit einen äußeren Strömungskanal (20) zwischen den beiden Rohren (12, 18) definiert, der im Wesentlichen parallel zum inneren Strömungskanal (14) verläuft,
- Erstellen eines Dampfstroms (22) in und entlang des inneren Strömungskanals (14),
- Erstellen eines Wasserstroms (28) in und entlang des äußeren Strömungskanals (20), wobei der besagte Wasserstrom (28) ausgeführt ist, um einen Schall zu dämpfen, der durch den besagten Dampfstrom (22) erzeugt wird, der durch den inneren Strömungskanal (14) strömt, und
- Strömen von Gas in den Wasserstrom (28) zum Erzeugen eines Stroms von Gasbläschen (34) innerhalb des besagten Wasserstroms (28).

2. Verfahren nach Anspruch 1, wobei das besagte Gas konstant in den Wasserstrom (28) geströmt wird, um einen Strom von Gasbläschen (34) zu erzeugen, der sich gleichmäßig innerhalb des besagten Wasserstroms (28) verteilt.

3. Verfahren nach Anspruch 1, das darüber hinaus den Schritt des Extrahierens zumindest eines Teils des besagten Gases aus dem äußeren Strömungskanal (20) umfasst, um den Druckaufbau oder das Hinausdrängen der Wasserschicht zu verhindern.

4. Verfahren nach Anspruch 1, das darüber hinaus den Schritt der Anordnung des inneren Rohres (12) koaxial zum äußeren Rohr (18) umfasst.

5. Verfahren nach Anspruch 1, das darüber hinaus den Schritt der Erstellung einer schwingungsisolierten Verbindung zwischen den beiden Rohren (12, 18) durch die Verwendung einer schwingungsisolierten Halterung umfasst.

6. Verfahren nach Anspruch 1, wobei das Volumen des Wasserstroms (28) im Verhältnis zum Dampfstrom (22) vergleichsweise groß ist.

7. System zur Ausführung des Verfahrens nach Anspruch 1, folgendes umfassend:
- eine erste Vorrichtung (50), im Speziellen einen Generator einer Stromanlage, der ausgeführt ist, um Wasser aufzunehmen, und um das besagte Wasser in Dampf zu verwandeln,
- eine zweite Vorrichtung (60), im Speziellen einen Wärmetauscher, der ausgeführt ist, um Dampf aufzunehmen, und den besagten Dampf in Wasser zu verwandeln, und
- eine Rohranordnung, ein inneres Rohr (12) umfassend, das an seiner Innenseite einen inneren Strömungskanal (14) definiert, der in Rohrrichtung des inneren Rohres (12) fortschreitet, und ein äußere Rohr (18), welches das innere Rohr (12) umgibt und sich im Wesentlichen parallel dazu erstreckt, und somit einen äußeren Strömungskanal (20) zwischen den beiden Rohren (12, 18) definiert, der im Wesentlichen parallel zum inneren Strömungskanal (14) verläuft, wobei das besagte innere Rohr (12) einen Dampfeinlass (24) aufweist, um darin Dampf aus der besagten ersten Vorrichtung (50) hereinzuströmen und einen Dampfauslass (26), um Dampf aus der besagten zweiten Vorrichtung (60) herauszuströmen, um einen Dampfstrom (22) in und entlang des inneren Strömungskanals (14) aus der besagten ersten Vorrichtung (50) in die besagte zweite Vorrichtung (60) zu erzeugen, wobei das besagte äußere Rohr (18) einen Wassereinlass (30) zum Hereinströmen von Wasser aus der besagten zweiten Vorrichtung (60), und einen Wasserauslass (32) zum Herausströmen von Wasser zur besagten ersten Vorrichtung (50) aufweist, um einen Wasserstrom (28) in und entlang des äußeren Strömungskanals (20) von der besagten zweiten Vorrichtung (60) zur besagten ersten Vorrichtung (50) zu erzeugen, wobei der besagte Wasserstrom (28) ausgeführt ist, um einen Schall zu dämpfen, der durch den besagte Dampfstrom (22) erzeugt wird, der durch den inneren Strömungskanal (14) strömt, wobei das besagte äußere Rohr (18) darüber hinaus einen Gaseinlass (38) zum Hereinströmen von Gas in den Wasserstrom (28) aufweist, um einen Strom von Gasbläschen (34) innerhalb des besagten Wasserstroms (28) zu erzeugen.

8. System nach Anspruch 7, wobei das äußere Rohr (18) einen Extrahierungskanal (51) zum Extrahieren zumindest eines Teils des besagten Gases aus dem äußeren Strömungskanal (20) umfasst, um den Druckaufbau und die Verschlechterung der Isoliereigenschaften der Wasserschicht zu verhindern.

9. System nach Anspruch 7, wobei das innere Rohr (12) koaxial zum äußeren Rohr (18) verläuft.

10. System nach Anspruch 7, das darüber hinaus eine Halterungsstruktur zum Verbinden des inneren und des äußeren Rohres (12, 18) miteinander oder über ein Isolierelement (46) umfasst, um eine schwingungsisolierte Verbindung zwischen den beiden Rohren (12, 18) herzustellen.

11. System nach Anspruch 7, wobei der Durchmesser des äußeren Rohres (18) im Verhältnis zum Durchmesser des inneren Rohres (12) vergleichsweise groß ist.

## Revendications

1. Procédé pour atténuer le bruit produit par des tuyaux transportant un écoulement de fluides, de gaz, de particules ou de combinaisons de certains de ceux-ci, comprenant les étapes consistant à :
- fournir un agencement (10) de tuyaux, qui comprend un tuyau intérieur (12) qui définit, dans son intérieur, un canal d'écoulement intérieur (14) qui avance dans une direction (16) de tuyau du tuyau intérieur (12), et un tuyau extérieur (18) qui entoure le tuyau intérieur (12) et avance de manière sensiblement parallèle à celui-ci, définissant de ce fait un canal d'écoulement extérieur (20) entre les deux tuyaux (12, 18) qui est sensiblement parallèle au canal d'écoulement intérieur (14),
- établir un écoulement de vapeur (22) dans et le long du canal d'écoulement intérieur (14),
- établir un écoulement d'eau (28) dans et le long du canal d'écoulement extérieur (20), ledit écoulement d'eau (28) étant adapté pour atténuer un bruit produit par ledit écoulement de vapeur (22) s'écoulant à travers le canal d'écoulement intérieur (14), et
- le déversement de gaz dans l'écoulement d'eau (28) pour générer un flux de bulles de gaz (34) dans ledit écoulement d'eau (28).

2. Procédé selon la revendication 1, dans lequel ledit gaz est déversé en continu dans l'écoulement d'eau (28) pour générer un flux de bulles de gaz (34) qui est réparti de façon égale dans ledit écoulement d'eau (28).

3. Procédé selon la revendication 1, comprenant en outre l'étape consistant à extraire au moins une partie dudit gaz du canal d'écoulement extérieur (20) afin d'empêcher l'accumulation de pression ou l'expulsion de la couche d'eau.

4. Procédé selon la revendication 1, comprenant en outre l'étape consistant à agencer le tuyau intérieur (12) de manière coaxiale au tuyau extérieur (18).

5. Procédé selon la revendication 1, comprenant en outre l'étape consistant à établir une connexion isolée des vibrations entre les deux tuyaux (12, 18) à l'aide d'une monture isolée des vibrations.

6. Procédé selon la revendication 1, dans lequel le volume de l'écoulement d'eau (28) est relativement grand par rapport au volume de l'écoulement de vapeur (22).

7. Système pour réaliser le procédé selon la revendication 1, comprenant :
- un premier dispositif (50), en particulier un générateur d'une centrale d'énergie, qui est adapté pour recevoir l'eau et pour transformer ladite eau en vapeur,
- un second dispositif (60), en particulier un échangeur de chaleur, qui est adapté pour recevoir la vapeur et pour transformer ladite vapeur en eau, et
- un agencement de tuyaux, comprenant un tuyau intérieur (12) qui définit, dans son intérieur, un canal d'écoulement intérieur (14) qui avance dans une direction de tuyau du tuyau intérieur (12), et un tuyau extérieur (18) qui entoure le tuyau intérieur (12) et avance de manière sensiblement parallèle à celui-ci, définissant de ce fait un canal d'écoulement extérieur (20) entre les deux tuyaux (12, 18) qui est sensiblement parallèle au canal d'écoulement intérieur (14), ledit tuyau intérieur (12) ayant une entrée de vapeur (24) pour déverser intérieurement la vapeur dudit premier dispositif (50) et une sortie de vapeur (26) pour déverser extérieurement la vapeur dans ledit second dispositif (60) afin d'établir un écoulement de vapeur (22) dans et le long du canal d'écoulement intérieur (14) depuis ledit premier dispositif (50) vers ledit second dispositif (60), ledit tuyau extérieur (18) ayant une entrée d'eau (30) pour déverser intérieurement l'eau dudit second dispositif (60) et une sortie d'eau (32) pour déverser extérieurement l'eau dans ledit premier dispositif (50) afin d'établir un écoulement d'eau (28) dans et le long du canal d'écoulement extérieur (20) depuis ledit second dispositif (60) vers ledit premier dispositif (50), ledit écoulement d'eau (28)) étant adapté pour atténuer un bruit produit par ledit écoulement de vapeur (22) s'écoulant à travers le canal d'écoulement intérieur (14), ledit tuyau extérieur (18) ayant en outre une entrée de gaz (38) pour déverser le gaz dans l'écoulement d'eau (28) afin de générer un flux de bulles de gaz (34) dans ledit écoulement d'eau (28).

8. Système selon la revendication 7, dans lequel le tuyau extérieur (18) comprend un conduit d'extraction (51) pour extraire au moins une partie dudit gaz du canal d'écoulement extérieur (20) afin d'empêcher l'accumulation de pression et la détérioration des propriétés d'isolation de la couche d'eau.

9. Système selon la revendication 7, dans lequel le tuyau intérieur (12) est coaxial avec le tuyau extérieur (18).

10. Système selon la revendication 7, comprenant en outre une structure de support connectant le tuyau intérieur et le tuyau extérieur (12, 18) l'un à l'autre via un élément d'isolation (46) pour établir une connexion isolée des vibrations entre les deux tuyaux (12, 18).

11. Système selon la revendication 7, dans lequel le diamètre du tuyau extérieur (18) est relativement grand par rapport au diamètre du tuyau intérieur (12).
